# FASCICULE DE BREVET EUROPEEN

(11) **EP 3 941 293 B1**
(45) Date de publication et mention de la délivrance du brevet: **07.06.2023**
(21) Numéro de dépôt: 20713584.9
(22) Date de dépôt: 20.03.2020
(51) Int. Cl.: A42B 3/04, B62J 11/24, B62H 5/00

(54) **DISPOSITIF ANTIVOL DE CASQUE POUR DEUX ROUES**
DIEBSTAHLSICHERUNG FÜR EINEN HELM FÜR EIN ZWEIRADFAHRZEUG
ANTI-THEFT DEVICE FOR A HELMET FOR A TWO-WHEELED VEHICLE

(30) Priorité: 21.03.2019 FR 1902905
(43) Date de publication de la demande: 26.01.2022
(73) Titulaire: Pittarello, Emmanuel, 06220 Vallauris (FR)
(72) Inventeur: Pittarello, Emmanuel, 06220 Vallauris (FR)
(74) Mandataire: Loyer & Abello
(86) Numéro de dépôt international: PCT/EP2020/057830
(87) Numéro de publication internationale: WO 2020/188099

(56) Documents cités:
- WO-A1-2012/042068
- BR-A- 8 301 136
- FR-A1- 2 423 609
- FR-A1- 2 470 225
- JP-A- 2007 154 351

## Description

L'invention est relative à un dispositif antivol de casque pour deux roues, de type motocyclette, scooter, bicyclette et trottinette.

De nombreux dispositifs antivol de casque pour deux roues sont connus et fréquemment utilisés. Par exemple, on connaît le document FR2470225 qui divulgue un dispositif antivol de casque destiné à permettre son verrouillage sur une partie du cadre, du porte bagage ou du guidon. Il est caractérisé en ce que le casque comporte une serrure intégrée obtenue par la combinaison d'une gorge diamétrale pratiquée sur la partie supérieure du casque et de deux orifices perpendiculaires recevant une clavette de verrouillage. Il permet de réaliser ainsi le cerclage total du support. Dans ce dispositif, il est possible de libérer le casque du guidon avec l'intervention d'une tronçonneuse à métaux, ce qui n'endommagerait que la clavette située sur le sommet du casque.

On connaît également du document FR2862599 un dispositif antivol de casque intégral pour cyclomoteurs comprenant des moyens de condamnation du levier de frein avant ou du levier d'embrayage en position serré, lesdits moyens se verrouillent sur le canon verrou à la place des embouts de guidon existant. Avec ce dispositif, lorsque l'antivol est en fonction donc verrouillé, il est également possible de sortir le casque intégral avec l'intervention d'une tronçonneuse à métaux ou découpage.

Enfin, on connaît encore du document FR2900954 un dispositif antivol de casque intégral qui utilise le guidon du motocycle et le levier de frein ou d'embrayage. Les extrémités de la poignée du guidon et du levier de frein ou d'embrayage sont reliées entre elles avec une liaison composée d'une serrure située entre deux anneaux coulissants.

Ce dispositif peut aussi être sectionné avec notamment une tronçonneuse à métaux ou bien simplement par démontage du levier de frein ou d'embrayage par accès à la vis de verrouillage.

Ainsi, l'inconvénient principal des dispositifs antivol connus et décrits ci-dessus est qu'il est possible de les couper avec l'intervention d'une tronçonneuse à métaux notamment.

Un autre inconvénient est que ces dispositifs sont utiles majoritairement pour empêcher le vol d'un casque intégral seulement et ne sont pas adaptés pour empêcher le vol de tout type de casque.

Il apparaissait donc opportun de mettre au point un dispositif antivol de casque qui ne puisse pas être sectionné par une tronçonneuse à métaux et qui soit utilisable pour tous les types de casque pour deux roues, à savoir les casques de bicyclette, de trottinette comme les différents types de casque de motocyclette et scooter.

Le document FR2423609 décrit un dispositif antivol permettant de verrouiller un casque sur un véhicule à deux roues selon le préambule de la revendication 1.

L'invention a pour but de mettre au point un dispositif antivol pour tout type de casque pour deux roues qui soit complètement inviolable.

Ainsi, l'inventeur a mis au point un dispositif antivol de casque pour deux roues selon la revendication indépendante 1 comprenant une serrure avec un pêne, un barillet inséré dans un embout de guidon, ledit barillet comprenant une gâche et une clé, ladite serrure étant reliée au sommet du casque d'une part et au guidon du deux roues d'autre part.

Dans la présente invention, le terme « clé » représente tout système adapté pour verrouiller la serrure, système mécanique ou électrique ou autre.

Comme cela pourra être compris ci-après, les avantages du dispositif antivol selon l'invention sont :
- qu'il est impossible de sortir le casque accroché au niveau du guidon,
- qu'aucune intervention de scie ou tronçonneuse à métaux n'est possible pour libérer le casque,
- qu'il est adapté pour tout type de casque pour deux roues,
- qu'il est moins volumineux, plus simple, plus efficace et moins coûteux que les dispositifs préexistants, et enfin
- qu'il permet de garder le casque à l'abri des intempéries d'une part par le positionnement même du casque au niveau de l'embout de guidon et d'autre part par la possibilité d'ajouter une housse de protection sur le casque.

L'invention consiste en un certain nombre de dispositions dont il est plus explicitement question ci-après, qui est illustrée par un exemple de réalisation donné en se référant aux figures ci-annexées, cet exemple étant purement illustratif et nullement limitatif.

Sur ces figures :

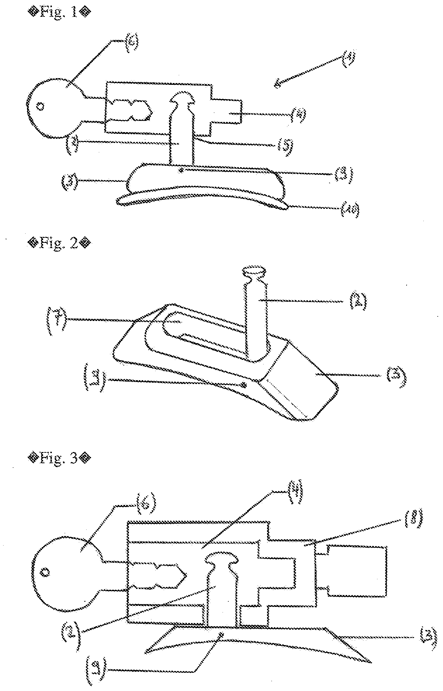

Fig. 1 est un schéma d'un dispositif antivol (1) partiel selon l'invention comprenant le pêne (2), le barillet (4), la clé (6), la gâche (5), le support (3) et une semelle intermédiaire (10). Il ne comprend pas l'embout de guidon.
Fig. 2 est une vue en perspective du support (3) comprenant une gorge (7) et du pêne (2) du dispositif antivol selon l'invention.
Fig. 3 est un schéma général du dispositif antivol verrouillé selon l'invention avec le barillet (4) inséré dans un embout de guidon (8), le pêne inséré dans le barillet. Cette figure permet de mettre en évidence que le pêne (2) n'est pas accessible à la découpe lorsque le dispositif antivol est verrouillé.

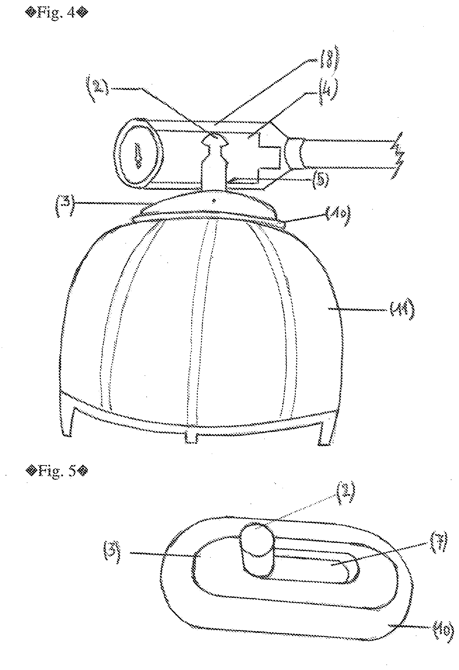

Fig. 4 est un schéma du dispositif antivol d'un casque pour deux roues selon l'invention, il montre le casque attaché au guidon d'un deux roues par l'intermédiaire dudit dispositif fixé au sommet du casque par une semelle intermédiaire (10) et au guidon par l'embout du guidon (8).
Fig. 5 est une vue de dessus du pêne (2) et du support (3) qui est fixé sur une semelle intermédiaire (10).

En se reportant aux dessins, l'invention concerne un dispositif antivol de casque (1) pour deux roues comprenant une serrure avec une première partie constituée d'un pêne (2) et une seconde partie constituée d'un barillet (4) inséré dans un embout de guidon (8), ledit barillet comprenant une gâche (5) et une clé de verrouillage (6) dudit pêne (2), ledit dispositif antivol comprenant le pêne (2) disposé dans un support (3) comprenant une gorge (7) de manière à pouvoir tourner de 90° dans la gorge (7) dudit support (3) et le barillet (4) présente les dimensions adaptées pour être inséré et verrouillé dans un embout de guidon (8) de manière à ce qu'il y ait très peu ou au mieux aucun espace entre le support (3) et l'embout de guidon (8) lorsque le pêne (2) est verrouillé dans le barillet (4).

Le support et le pêne seront constitués d'un matériau ou alliage suffisamment solide pour éviter qu'ils ne se cassent par arrachement. On peut citer par exemple l'aluminium usiné, l'inox ou acier inoxydable et le carbone notamment.

Dans un premier mode de réalisation préférentiel le dispositif antivol selon l'invention, le support (3) et le pêne (2) sont constitués d'un matériau ou alliage métallique peu sensible à la corrosion et au vieillissement.

Par matériau ou alliage métallique peu sensible à la corrosion et au vieillissement on entend de préférence les matériaux tels que l'aluminium, le nickel et l'inox.

Le support (3) du dispositif antivol est susceptible d'être fixé au sommet du casque (1). Il peut être fixé sur la surface du casque à tout endroit où le casque est lisse, permettant ainsi son accroche solide.

Dans un mode de réalisation préférentiel, le support (3) du dispositif selon l'invention sera fixé au sommet du casque (11) et sera soit en position extérieure du casque soit intégré à l'intérieur du casque. Dans ce dernier cas il devra être inséré au moment de la fabrication du casque à l'intérieur du sommet du casque de préférence, laissant apparaître la gorge (7) et le pêne (3). Dans ce mode de réalisation, le dessous du support (3) est galbé de manière à épouser la forme du sommet du casque (11).

La forme générale du support (3) peut être variable. Au niveau de sa base elle peut être ronde, ovale, rectangulaire ou carrée, de préférence elle sera esthétique. Le dessus du support (3) peut également être galbé. L'homme du métier adaptera la forme du support dans toutes les dimensions en fonction des besoins et de l'esthétique.

Dans un mode de réalisation préférentiel selon l'invention, le support (3) du dispositif antivol présente des moyens de fixation dudit support au sommet du casque (11) et un moyen de fixation et de rotation du pêne (2) dans la gorge (7).

Les moyens de fixations du support (3) au sommet du casque (11) peuvent être par exemple :
- fixation du support (3) sur une semelle intermédiaire (10), par exemple en matériau de type polycarbonate, par perçage du fond du support (3) de deux trous et fixation avec deux vis d'environ 3 mm sur la semelle (10), puis collage de ladite semelle sur le sommet du casque (11) avec par exemple une colle multi composants.
- perçage de la calotte du casque et du fond du support (3) par deux trous et positionnement de deux vis de blocage.
- intégration du support (3) au cours de la fabrication du casque pour le positionner au sommet du casque. L'homme du métier utilisera les moyens à sa disposition pour ce faire.

Le moyen de fixation et de rotation du pêne (2) dans la gorge (7) du support (3) peut être tout moyen permettant que le pêne soit fixe et puisse tourner de 90°.

Dans un mode de réalisation très préférentiel, le dispositif antivol (1) selon l'invention comprend une semelle intermédiaire (10) fixée sur le support (3) comme décrit ci-dessus par exemple. Ce dispositif antivol complet peut être directement et simplement utilisé par l'utilisateur par collage de la semelle intermédiaire (10) sur son casque, puis insertion et verrouillage du barillet (4) inséré dans l'embout du guidon adapté pour son deux roues.

Comme expliqué ci-dessus, le dispositif antivol selon l'invention est constitué d'une serrure comprenant deux parties, le pêne disposé dans un support (3) et le barillet (4) inséré dans un embout de guidon (8).

Dans un mode de réalisation préférentiel selon l'invention, le moyen de fixation et de rotation du pêne (2) dans la gorge (7) du support (3) est une vis de blocage (9).

Le barillet (4) du dispositif antivol selon l'invention présente les dimensions adaptées pour être inséré et verrouillé dans l'embout du guidon (8).

Les embouts de guidon sont soit universels et adaptés à toutes les motocyclettes ou bicyclette, soit spécifiques à une marque de deux roues. L'embout du guidon (8) adapté pour intégrer le barillet (4) présente les dimensions nécessaires pour loger ledit barillet et comprend un orifice adapté pour l'insertion du pêne (2). La fixation de l'embout de guidon dans le guidon s'effectue par une vis pourvue à son extrémité opposée à la serrure avec une partie en métal ou en caoutchouc qui, par expansion, serre l'embout du guidon dans le guidon. L'homme du métier saura utiliser tout type de fixation adaptée et connue pour la fixation de l'embout du guidon.

Le barillet (4) présentera donc les dimensions adaptées pour être inséré dans l'embout du guidon (8) du deux roues. Par exemple pour un embout de guidon de diamètre extérieur de 30 mm, le barillet (4) présentera un diamètre extérieur de 22 mm au plus. La longueur du barillet (4) sera au maximum de même longueur, plus ou moins 5 mm, que la partie extérieure de l'embout de guidon.

Le verrouillage du barillet (4) dans l'embout de guidon peut être effectué par tout moyen adapté et notamment par une vis de blocage ou dans le cas d'une serrure à poussoir par le vissage du barillet et ajout d'une vis de blocage.

Le barillet (4) est inséré puis verrouillé dans l'embout de guidon par un moyen de blocage pour sécuriser le verrouillage.

Dans un mode de réalisation préférentiel selon l'invention, le barillet (4) est inséré et verrouillé dans l'embout de guidon (8) et est sécurisé par une vis de blocage.

Une fois le barillet inséré dans l'embout de guidon, le démontage de l'embout de guidon devient impossible car la fixation de l'embout de guidon est protégée par le barillet (4). Lorsque le pêne est verrouillé dans le barillet, ni le barillet ni l'embout de guidon ne peuvent être démontés. Le dispositif est sécurisé ainsi sur le guidon du deux roues.

Le pêne (2) du dispositif selon l'invention doit présenter une dimension en largeur de façon à ce qu'il n'y ait pas de mouvement latéral possible dudit pêne (2) dans la gâche (5). Il doit présenter une dimension en longueur adaptée au barillet lui-même adapté à la taille de l'embout de guidon de manière à ce qu'il y ait très peu ou au mieux aucun espace entre le support (3) et l'embout de guidon (8) lorsque le pêne (2) est verrouillé dans le barillet (4).

Dans un mode de réalisation très préférentiel le pêne (2) inséré dans le barillet (4) est inaccessible à un outil tranchant tel que scie ou tronçonneuse à métaux.

Le dispositif antivol de casque pour deux roues selon l'invention est caractérisé en ce que ledit casque est choisi parmi le casque de bicyclette, de trottinette et les casques de motocyclette types intégral, modulable et jet.

Dans un autre mode de réalisation préférentiel, un moyen peut être positionné sur le support (3) pour protéger le pêne (2) en position couchée dans sa gorge (7). Ledit moyen pouvant être un plaque coulissante ou un cache rabattable. Ce moyen de protection du pêne peut être ajouté dans les deux cas de positionnement du dispositif antivol sur le casque, soit lorsque le dispositif est à l'extérieur du sommet du casque soit lorsqu'il est inséré à l'intérieur du sommet du casque au moment de la fabrication du casque.

L'invention concerne encore un kit antivol de casque pour deux roues comprenant un dispositif antivol (1) selon l'invention, lequel est fixé à une semelle intermédiaire (10) par le support (3) et comprend des vis de blocage et un tube de colle. Ainsi, le kit antivol comprendra une première partie constituée d'un pêne disposé dans la gorge du support (3) fixé à une semelle intermédiaire, une seconde partie constituée du barillet inséré dans un embout de guidon, des vis de blocage et un tube de colle.

L'invention concerne encore un casque pour deux roues selon la revendication 11, comprenant, de préférence à son sommet, la première partie du dispositif antivol selon l'invention constitué d'un pêne disposé dans un support comprenant une gorge. Dans ce cas, le support est intégré au casque au cours de sa fabrication. Ledit support peut présenter une protection extérieure pour maintenir le pêne dans la gorge du support.

## Revendications

1. Dispositif antivol de casque pour deux roues (1) comprenant une serrure avec
une première partie constituée d'un pêne (2) et une seconde partie constituée d'un barillet inséré dans un embout de guidon (8) , ledit barillet (4) comprenant une gâche (5) et une clé de verrouillage (6) dudit pêne (2),
**caractérisé en ce que** le pêne (2) est disposé dans un support (3) comprenant une gorge (7) de manière à pouvoir tourner de 90° dans la gorge (7) dudit support (3) et le barillet (4) présente les dimensions adaptées pour être inséré et verrouillé dans l'embout de guidon (8) de manière à ce qu'il y ait très peu ou au mieux aucun espace entre le support (3) et l'embout de guidon (8) lorsque le pêne (2) est verrouillé dans le barillet (4).

2. Dispositif antivol selon la revendication 1 **caractérisé en ce que** le support (3) et le pêne (2) sont constitués d'un matériau ou alliage métallique peu sensible à la corrosion et au vieillissement.

3. Dispositif antivol selon la revendication 2 **caractérisé en ce que** le support (3) et le pêne (2) sont constitués en aluminium ou en inox.

4. Dispositif antivol selon les revendications 1 et 3 **caractérisé en ce que** le support (3) présente des moyens de fixation dudit support (3) au sommet du casque (11) et un moyen de fixation et de rotation du pêne (2) dans la gorge (7).

5. Dispositif antivol selon les revendications 1 à 4 **caractérisé en ce que** le support (3) est fixé sur une semelle intermédiaire (10).

6. Dispositif antivol selon la revendication 5 **caractérisé en ce que** le moyen de fixation et de rotation du pêne (2) dans la gorge (7) du support (3) est une vis de blocage (9).

7. Dispositif antivol selon la revendication 1 **caractérisé en ce que** le barillet (4) est inséré et verrouillé dans un embout de guidon (8) et est sécurisé par une vis de blocage.

8. Dispositif antivol selon l'une quelconque des revendications précédentes **caractérisé en ce que** le casque pour deux roues est choisi parmi le casque de bicyclette, de trottinette et les casques de motocyclette types intégral, modulable et jet.

9. Dispositif antivol selon l'une quelconque des revendications précédentes **caractérisé en ce qu'**un moyen est positionné sur le support (3) pour protéger le pêne (2) en position couchée dans sa gorge (7).

10. Kit antivol de casque pour deux roues comprenant un dispositif antivol (1) selon la revendication 1 fixé à une semelle intermédiaire (10) par le support (3), des vis de blocage et un tube de colle.

11. Casque pour deux roues **caractérisé en ce qu'**il comprend, de préférence à sor sommet, la première partie du dispositif selon la revendication 1 constitué d'un pêne disposé dans un support comprenant une gorge.

## Patentansprüche

1. Diebstahlsicherung für einen Helm für ein Zweiradfahrzeug (1) umfassend ein Schloss mit einem ersten Teil, welcher aus einem Bolzen (2) besteht, und einem zweiten Teil, welcher aus einem in ein Lenkerende (8) eingesetzten Schließzylinder besteht, wobei der Schließzylinder (4) ein Schließblech (5) und einen Schlüssel (6) zur Verriegelung des Bolzens (2) umfasst,
**dadurch gekennzeichnet, dass** der Bolzen (2) auf einem Träger (3) angeordnet ist, welcher eine Nut (7) umfasst, so dass der Bolzen um 90° in der Nut (7) des Trägers (3) drehbar ist und dass der Schließzylinder (4) die angepasste Abmessung aufweist, um in das Lenkerende (8) eingesetzt und verriegelt werden zu können, so dass nur wenig Freiraum oder bestenfalls kein Freiraum zwischen dem Träger (3) und dem Lenkerende (8) besteht, wenn der Bolzen (2) im Schließzylinder (4) verriegelt ist.

2. Diebstahlsicherung gemäß Anspruch 1, **dadurch gekennzeichnet, dass** der Träger (3) und der Bolzen (2) aus einem metallischen Material oder Metalllegierung mit geringer Korrosions- und Alterungsempfindlichkeit bestehen.

3. Diebstahlsicherung gemäß Anspruch 2, **dadurch gekennzeichnet, dass** der Träger (3) und der Bolzen (2) aus Aluminium oder Edelstahl bestehen.

4. Diebstahlsicherung gemäß Anspruch 1 und 3, **dadurch gekennzeichnet, dass** der Träger (3) Befestigungsmittel des Trägers (3) an der Helmoberseite und Befestigungs- und Rotationsmittel des Bolzens (2) in der Nut (7) aufweisen.

5. Diebstahlsicherung gemäß Anspruch 1 bis 4, **dadurch gekennzeichnet, dass** der Träger (3) auf einer Zwischensohle (10) befestigt ist.

6. Diebstahlsicherung gemäß Anspruch 5, **dadurch gekennzeichnet, dass** das Befestigungs- und Rotationsmittel des Bolzens (2) in der Nut (7) des Trägers (3) eine Feststellschraube (9) ist.

7. Diebstahlsicherung gemäß Anspruch 1, **dadurch gekennzeichnet, dass** der Schließzylinder (4) in einem Lenkerende (8) eingesetzt und verriegelt ist, und mittels einer Feststellschraube gesichert ist.

8. Diebstahlsicherung gemäß einem der vorstehenden Ansprüche, **dadurch gekennzeichnet, dass** der Helm für Zweiradfahrzeuge ausgewählt ist zwischen Fahrradhelmen, Rollerhelmen und Motorradhelme des Typs Integral, Modular und Jet.

9. Diebstahlsicherung gemäß einem der vorstehenden Ansprüche, **dadurch gekennzeichnet, dass** eine Mittel auf dem Träger (3) angeordnet ist, um den Bolzen (2) in liegender Position in seiner Nut (7) zu schützen.

10. Diebstahlsicherungsset für Helme für Zweiradfahrzeuge umfassend eine Diebstahlsicherung (1) gemäß Anspruch 1, welcher auf einer Zwischensohle (10) mittels des Trägers angeordnet ist, eine Feststellschraube und eine Klebertube.

11. Helm für Zweiradfahrzeuge, **dadurch gekennzeichnet, dass** er vorzugsweise an seiner Oberseite den ersten Teil der Vorrichtung gemäß Anspruch 1, welche aus einem Bolzen, der in einem Träger mit einer Nut angeordnet ist, besteht, umfasst.

## Claims

1. Anti-theft device for a helmet for a two-wheeled vehicle (1) comprising a lock with a first part consisting of a bolt (2) and a second part consisting of a cylinder inserted into an end of a handlebar (8), said cylinder (4) comprising a strike plate (5) and a locking key (6) for said bolt (2),
**characterised in that** the bolt (2) is mounted in a support (3) comprising a groove (7) so as to be able to rotate through 90° in the groove (7) of said support (3) and the cylinder (4) has suitable dimensions for being inserted and locked in the end of a handlebar (8) so that there is very little or optimally no space between the support (3) and the end of the handlebar (8) when the bolt (2) is locked in the cylinder (4).

2. Anti-theft device according to claim 1, **characterised in that** the support (3) and the bolt (2) consist of a metal material or alloy of low susceptibility to corrosion and ageing.

3. Anti-theft device according to claim 2, **characterised in that** the support (3) and the bolt (2) are made of aluminium or stainless steel.

4. Anti-theft device according to claims 1 and 3, **characterised in that** the support (3) has means of attaching said support (3) to the top of the helmet (11) and a means of attaching and rotating the bolt (2) in the groove (7).

5. Anti-theft device according to claims 1 to 4, **characterised in that** the support (3) is attached to an intermediate flange (10).

6. Anti-theft device according to claim 5, **characterised in that** the means of attaching and rotating the bolt (2) in the groove (7) of the support (3) is a locking screw (9).

7. Anti-theft device according to claim 1, **characterised in that** the cylinder (4) is inserted and locked in an end of a handlebar (8) and is secured by a locking screw.

8. Anti-theft device according to any one of the preceding claims, **characterised in that** the helmet for a two-wheeled vehicle is chosen from among the bicycle helmet, the scooter helmet and the full-face, flip-up and open-face type motorcycle helmets

9. Anti-theft device according to any one of the preceding claims, **characterised in that** a means is positioned on the support (3) to protect the bolt (2) when lying in its groove (7).

10. Anti-theft kit for a helmet for a two-wheeled vehicle comprising an anti-theft device (1) according to claim 1 attached to an intermediate flange (10) by the support (3), locking screws and a tube of glue.

11. Helmet for a two-wheeled vehicle, **characterised in that** it preferably comprises at its top the first part of the device according to claim 1 consisting of a bolt mounted in a support comprising a groove.
